(19) Europäisches Patentamt
European Patent Office
Office européen des brevets

(11) Veröffentlichungsnummer : **0 043 043**
**B1**

(12) # EUROPÄISCHE PATENTSCHRIFT

(45) Veröffentlichungstag der Patentschrift : **11.04.84**

(51) Int. Cl.³ : **C 08 G 75/14**

(21) Anmeldenummer : **81104704.2**

(22) Anmeldetag : **19.06.81**

(54) **Verfahren zur Herstellung von Polythiomethylen-Polysulfiden sowie ihre Verwendung als Vulkanisiermittel.**

(30) Priorität : **01.07.80 DE 3024829**

(43) Veröffentlichungstag der Anmeldung : **06.01.82 Patentblatt 82/01**

(45) Bekanntmachung des Hinweises auf die Patenterteilung : **11.04.84 Patentblatt 84/15**

(84) Benannte Vertragsstaaten : **BE DE FR GB IT NL**

(56) Entgegenhaltungen :
**DE-B- 1 243 678**
**DE-B- 1 259 569**
**US-A- 2 429 859**
**US-A- 2 454 635**
**Die Akte enthält technische Angaben, die nach dem Eingang der Anmeldung eingereicht wurden und die nicht in dieser Patentschrift enthalten sind.**

(73) Patentinhaber : **RHEIN-CHEMIE RHEINAU GMBH**
**Postfach 81 04 09**
**D-6800 Mannheim 81 (DE)**

(72) Erfinder : **Morche, Klaus, Dr.**
**Viktoriastrasse 12**
**D-6800 Mannheim 1 (DE)**.
Erfinder : **Nützel, Karl, Dr.**
**Kornstrasse 23**
**D-6831 Neulussheim (DE)**
Erfinder : **Sauerbier, Michael, Dr.**
**Promenadeweg 36**
**D-6831 Brühl-Rohrhof (DE)**

(74) Vertreter : **Gremm, Joachim, Dr. et al**
**Bayer AG c/o Zentralbereich Patente, Marken und Lizenzen**
**D-5090 Leverkusen 1, Bayerwerk (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 043 043 B1

Jouve, 18, rue St-Denis, 75001 Paris, France

# Verfahren zur Herstellung von Polythiomethylen-Polysulfiden sowie ihre Verwendung als Vulkanisiermittel

Die Erfindung betrifft ein Verfahren zur Herstellung von Polythiomethylen-Polysulfiden durch Umsetzung von Paraformaldehyd mit Schwefel und Schwefelwasserstoff, sowie deren Verwendung als Vulkanisiermittel.

Polythiomethylen-Polysulfide (polysulfidisch überbrückte Polythiomethylene) sowie Verfahren zu ihrer Herstellung sind bekannt.

Sie entstehen z. B. durch Umsetzung von Formaldehyd mit Alkali- oder Ammonium-Polysulfid in wäßriger oder alkoholischer Lösung. Anstelle von Formaldehyd kann auch Dichlormethan oder ein Gemisch aus Formaldehyd und Dichlormethan eingesetzt werden.

(Lit.: US-A 2 039 206 ; US-A 2 206 641 ; US-A 2 225 228 ; US-A 2 429 859 ; T. Kohno, J. Soc. Rubber Ind. Japan 14, 436 (1941) ; Chem. Abstr. 42, $7086^9$ (1948) ; US-A 2 454 635 ; DE-A S 1 259 569).

Die Nachteile obiger Verfahren liegen auf der Hand :

1) Da in Lösung gearbeitet wird, sind die Volumenausbeuten bezogen auf Polythiomethylen-Polysulfid gering, und das Produkt muß nachträglich getrocknet werden.

2) Durch die Verwendung von Alkali- oder Ammoniumpolysulfiden werden die verbleibenden Mercaptogruppen in Salze überführt, die anschließend mittels Säuren wieder in Freiheit gesetzt werden müssen.

3) Da die Produkte kautschukelastisch anfallen, schließen sie sehr viel Alakali- bzw. Ammoniumsalze ein, die nur schwer und aufwendig wieder entfernt werden können.

Aufgabe der Erfindung ist es, ein chemisch eigenartiges Verfahren zur Herstellung von Polythiomethylen-Polysulfiden bereitzustellen, welches die mit den bekannten Verfahren verbundenen Nachteile nicht aufweist.

Die Aufgabe konnte überraschenderweise dadurch gelöst werden, daß man Paraformaldehyd, Schwefelwasserstoff und Schwefel miteinander umsetzt, wobei in praktisch quantitativer Ausbeute die entsprechenden Polythiomethylen-Polysulfide entstehen.

Als allgemeine Reaktionsgleichung gilt :

$$CH_2O + H_2S + S \longrightarrow HS{-}CH_2{-}S_x{-}(CH_2S_x)_n{-}CH_2SH + H_2O$$

Gegenstand der Erfindung ist somit ein Verfahren zur Herstellung von Polythiomethylen-Polysulfiden, welches dadurch gekennzeichnet ist, daß Paraformaldehyd, Schwefelwasserstoff und Schwefel in einer Eintopfreaktion miteinander umgesetzt werden.

Polythiomethylen-Polysulfide lassen sich durch folgende Formel darstellen :

$$HS{-}CH_2{-}S_x{-}(CH_2S_x)_n{-}CH_2{-}SH$$

x kann eine Zahl von 1,1-5, bevorzugt von 3-5 annehmen ;

n kann Zahlen von 0-100 000 bedeuten.

Die Reaktion kann bei Normaldruck und bei erhöhtem Druck bis zu 25 Bar durchgeführt werden. Bevorzugt werden Drucke von 0,1-25 Bar, besonders bevorzugt Drucke von 1-10 Bar, insbesondere Drucke von 2-4 Bar.

Als Umsetzungstemperatur wird ein Bereich von 40-200 °C bevorzugt, insbesondere ein Bereich von 80-130 °C.

Durch saure Katalysatoren kann die Reaktion beschleunigt werden. Bevorzugt werden 0,0-Di-alkyl- und Di-aryl-dithiophosphorsäuren, insbesondere 0,0-Di-2-äthylhexyl-dithiophosphorsäure.

Die Katalysatoren werden in Mengen von 0,05-1 Gew.%, bevorzugt von 0,1-0,5 Gew.%, insbesondere von 0,3-0,5 Gew.%, bezogen auf die Summe von eingesetztem Paraformaldehyd und Schwefel, eingesetzt.

Pro Mol Formaldehyd werden 1 Mol Schwefelwasserstoff und 0,1-4 Mole Schwefel eingesetzt. Bevorzugt werden 1-4 Mole Schwefel, insbesondere 2-4 Mole Schwefel eingesetzt.

Weiterer Gegenstand der Erfindung ist die Verwendung der so hergestellten Polythiomethylen-Polysulfide als Vulkanisiermittel für natürlichen und/oder synthetischen Kautschuk.

Bei den üblichen Vulkanisationstemperaturen zerfallen sie in Schwefel und andere vernetzungsaktive Bruchstücke. Man kann daher ganz oder teilweise auf Schwefel als Vulkanisiermittel verzichten.

Die anwendungstechnische Prüfung zeigt im Vergleich zu elementarem Schwefel, daß durch den Einsatz der Polythiomethylenpolysulfide als Vulkanisiermittel einwandfreie Kautschukvulkanisate mit guten mechanisch-technologischen Eigenschaften erhalten werden. Besonders hervorgehoben werden muß in diesem Zusammenhang das überraschenderweise gefundene, ausgezeichnete Hitzealterungs-Verhalten der Kautschuk-Vulkanisate.

Die Polythiomethylen-Polysulfide können dem Kautschuk in dem Fachmann geläufigen Mengen zugegeben werden. Die Dosierung erfolgt bevorzugt in Mengen von 0,5-10 Gew.Tln, insbesondere 2-5 Gew.Tln, pro 100 Gew.Tle Kautschuk.

Beispiel

234 g Paraformaldehyd, 1 000 g Schwefel und 6,2 g 0,0-Di-2-äthylhexyl-dithiophosphorsäure werden in einen Autoklaven eingebracht, der anschließend mit $H_2S$ gespült wird. Man heizt auf 120 °C auf, wobei der Ansatz ab 80 °C rührbar wird. Während der ganzen Reaktionszeit wird ein $H_2S$-Druck von 3 Bar aufrecht erhalten. Nach 5 Stunden wird die $H_2S$-Zufuhr unterbunden und noch 30 Minuten nachgerührt. Anschließend wird das entstandene Wasser abgeblasen. Der letzte Rest Wasser wird bei 35 mbar und 120 °C abgezogen.

Man erhält ein gelbes, bei 120 °C dünnflüssiges, bei Zimmertemperatur zähes Produkt, das nach etlichen Tagen langsam durchkristallisiert.

Ausbeute : praktisch quantitativ
Erweichungspunkt : 60 °C
S-Gehalt : 91,3 %

## Ansprüche

1. Verfahren zur Herstellung von Polythiomethylen-polysulfiden, dadurch gekennzeichnet, daß man Paraformaldehyd, Schwefelwasserstoff und Schwefel in einer Eintopfreaktion miteinander umsetzt.
2. Verfahren nach Anspruch 1, dadurch gekennzeichnet, daß die Reaktion drucklos oder unter Druck bis 25 Bar durchgeführt wird.
3. Verfahren nach Ansprüchen 1 und 2, dadurch gekennzeichnet, daß die Reaktion bei einer Temperatur von 40-200 °C durchgeführt wird.
4. Verfahren gemäß Ansprüchen 1-3, dadurch gekennzeichnet, daß die Reaktion in Gegenwart eines sauren Katalysators durchgeführt wird.
5. Verfahren gemäß Anspruch 4, dadurch gekennzeichnet, daß der Katalysator in Mengen von 0,05-1 Gew.% bezogen auf die Summe von eingesetztem Paraformaldehyd und Schwefel eingesetzt wird.
6. Verfahren gemäß Ansprüchen 1-5, dadurch gekennzeichnet, daß pro Mol Formaldehyd 1 Mol Schwefelwasserstoff und 0,1 bis 4 Mole Schwefel eingesetzt werden.
7. Verwendung von nach Ansprüchen 1 bis 6 hergestellten Polythiomethylen-Polysulfiden als Vulkanisiermittel in Natur- und Synthese-Kautschuken.

## Claims

1. Process for the preparation of polythiomethylene polysulphides, characterised in that paraformaldehyde, hydrogen sulphide ans sulphur are reacted with one another in a one-pot reaction.
2. Process according to Claim 1, characterised in that the reaction is carried out under atmospheric pressure or under a pressure of up to 25 bar.
3. Process according to Claims 1 and 2, characterised in that the reaction is carried out at a temperature of 40-200 °C.
4. Process according to Claims 1-3, characterised in that the reaction is carried out in the presence of an acidic catalyst.
5. Process according to Claim 4, characterised in that the catalyst is employed in amounts of 0.05-1 % by weight, relative to the sum of paraformaldehyde and sulphur employed.
6. Process according to Claims 1 to 5, characterised in that 1 mol of hydrogen sulphide and 0.1 to 4 mol of sulphur are employed per mol of formaldehyde.
7. Use of polythiomethylene polysulphides prepared according to Claims 1 to 6 as vulcanising agents in natural and synthetic rubbers.

## Revendications

1. Procédé de fabrication de polythiométhylène-polysulfures, caractérisé en ce qu'on fait réagir ensemble de la paraformaldéhyde, de l'hydrogène sulfuré et du soufre par une réaction en un seul récipient.
2. Procédé selon la revendication 1, caractérisé en ce qu'on exécute la réaction en l'absence de pression ou sous une pression atteignant jusqu'à 25 bars.
3. Procédé selon les revendications 1 et 2, caractérisé en ce qu'on exécute la réaction à une température de 40-200 °C.
4. Procédé selon les revendications 1 à 3, caractérisé en ce qu'on exécute la réaction en présence d'un catalyseur acide.
5. Procédé selon la revendication 4, caractérisé en ce qu'on utilise le catalyseur en des quantités de 0,05-1% en poids par rapport à la somme de la paraformaldéhyde et du soufre mis en jeu.

6. Procédé selon les revendications 1 à 5, caractérisé en ce que par mole de formaldéhyde on utilise 1 mole d'hydrogène sulfuré et 0,1 à 4 moles de soufre.

7. Utilisation des polythiométhylène-polysulfures préparés selon les revendications 1 à 6 comme agents de vulcanisation dans des caoutchoucs naturels et synthétiques.